# FASCICULE DE BREVET EUROPEEN

(11) **EP 3 589 550 B1**
(45) Date de publication et mention de la délivrance du brevet: **31.03.2021**
(21) Numéro de dépôt: 18709705.0
(22) Date de dépôt: 26.02.2018
(51) Int. Cl.: B64G 1/64, F42B 15/38

(54) **PROCÉDÉ ET DISPOSITIF DE LIAISON ET DE SÉPARATION LINÉAIRE DE DEUX ÉLÉMENTS COLLÉS**
VERFAHREN UND VORRICHTUNG ZUM VERBINDEN UND LINEAREN TRENNEN ZWEIER ZUSAMMENGEHALTENER ELEMENTE
METHOD AND DEVICE FOR THE CONNECTION AND LINEAR SEPARATION OF TWO ELEMENTS STUCK TOGETHER

(30) Priorité: 28.02.2017 FR 1751650
(43) Date de publication de la demande: 08.01.2020
(73) Titulaire: ArianeGroup SAS, 75015 Paris (FR)
(72) Inventeur: PARTENAY, Carole, 78430 Louveciennes (FR); MEDINA, Felipe, 78500 Sartrouville (FR)
(74) Mandataire: Brevalex
(86) Numéro de dépôt international: PCT/FR2018/050449
(87) Numéro de publication internationale: WO 2018/158531

(56) Documents cités:
- WO-A1-2015/014941
- FR-A1- 2 806 342
- US-A- 4 648 227

## Description

### DOMAINE TECHNIQUE

L'invention concerne une séparation linéaire, la plus douce possible, d'un premier élément par rapport à un second élément, qui sont au préalablement liés de façon rigide. L'invention s'applique, de préférence, aux lanceurs spatiaux, pour la séparation des étages entre eux ou d'un étage et de la charge utile, de missiles, de sondes spatiales, voire d'avions, dans le cas d'un largage de charge utile. Cette séparation a pour but de réduire la masse de l'ensemble embarqué, ou de larguer une charge utile. Ces applications se caractérisent par le fait qu'on a besoin de séparer des objets qui peuvent être fragiles, par exemple un satellite, et dont la liaison a eu à subir des charges mécaniques élevées, comme celles subies lors de la propulsion par un lanceur.

### ÉTAT DE LA TECHNIQUE ANTÉRIEURE

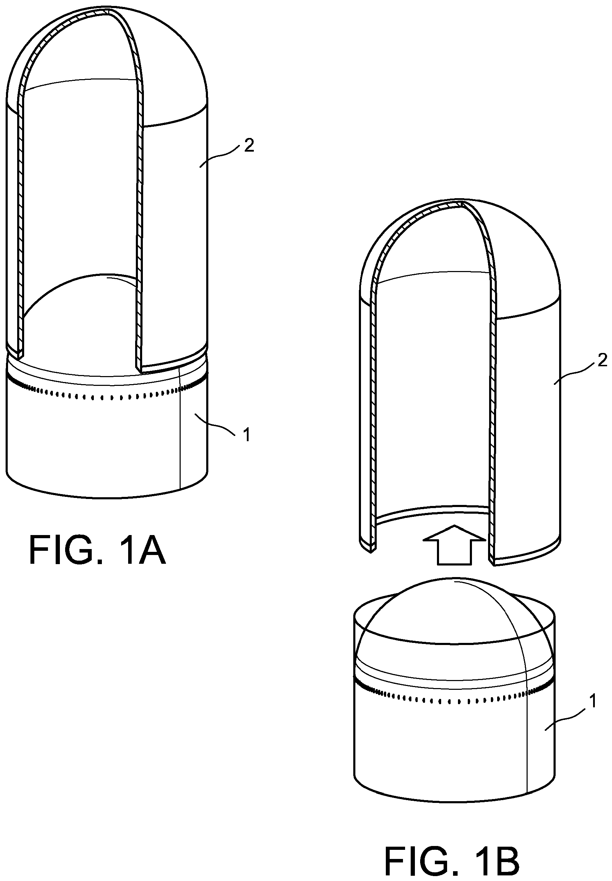

Les Figures 1A et 1B illustrent ce principe de séparation entre deux éléments 1 et 2 d'un lanceur. Le premier élément 1 est, de préférence, un élément de rang n, de préférence, un premier étage moteur. Le second élément est un élément de rang n + 1, soit un second élément moteur, soit une charge utile, par exemple un satellite. La séparation linéaire, dans l'axe du lanceur, doit donc être effectuée sans détérioration de la base du second élément et, dans le cas où on désire récupérer le premier élément 1, sans détérioration de la surface de celui-ci, où se trouvait la liaison entre ces deux éléments 1 et 2, cf. WO 2015/014941 A1.

Dans l'état actuel de la technique, le système de liaison-séparation est principalement de quatre types, qui sont les suivants :
1°) les liaisons par boulonnerie, rivetage et découpe pyrotechnique par fusion locale de la structure. Ces systèmes, de par leur fonctionnement, engendrent des débris de matière éjectés. De plus, la découpe provoque un choc important dans la structure, ce qui peut être dommageable pour les charges utiles du lanceur ;
   Le document de brevet FR 2 947 808 montre un exemple de mise en œuvre d'une telle solution.
2°) les liaisons par rivetage et découpe pyrotechnique par rupture de la structure, par l'intermédiaire de la déformation d'un élément pyrotechnique. Cette solution est la plus employée et n'engendre pas de débris, mais provoque un choc très important ;
3°) les liaisons par boulonnerie pyrotechnique et rupture ou séparation de l'écrou. Ce type de solution engendre beaucoup moins de chocs que les deux précédentes, mais nécessite plusieurs boulons pour passer les efforts d'un élément à l'autre, engendrant donc des risques plus importants de défaillances du fait du nombre de dispositifs impliqués ;
4°) les liaisons par sangle et ruptures de celle-ci par boulons pyrotechniques. Ce type de solution ne permet pas de passer de gros efforts entre les deux éléments et n'autorise pas de diamètres trop importants pour les lanceurs. Dans ce cas également, le relâchement des contraintes provoque un choc important dans les structures.

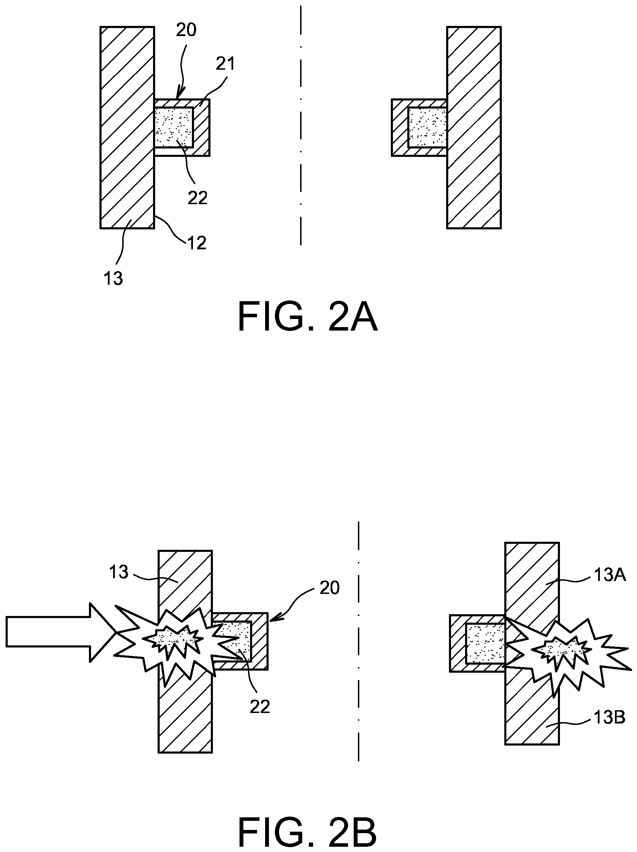

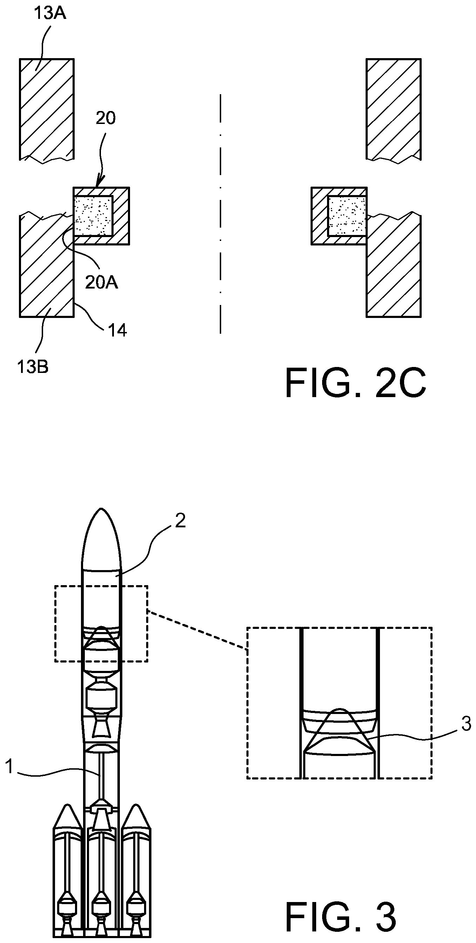

Par ailleurs, on connait un dispositif et un procédé, comme illustrés par les Figures 2A, 2B et 2C, où un élément de liaison 13 comporte, sur une paroi interne 14, une couronne de découpe 20. Cette dernière est constituée principalement d'un corps 21, torique et ouvert du côté de son diamètre externe. Il est rempli d'un matériau 22 pyrogène, c'est-à-dire générateur de chaleur, tel que de la thermite. On précise que sous le terme thermite, on comprend également les nanothermites.

En référence à la figure 2B, la mise à feu du matériau 22, constituant une substance pyrotechnique, provoque un échauffement brutal, jusqu'à la fusion des parties de l'élément de liaison 13, se trouvant en regard de ce matériau 22. L'échauffement de cette partie de l'élément de liaison 13, jusqu'à son point de fusion, provoque la séparation de cet élément de liaison 13, en deux parties. Ces deux parties sont représentées à la figure 2C, une partie supérieure 13A et une partie inférieure 13B. La couronne de découpe 20 a été préalablement fixée par un de ses bords 20A sur la paroi 14 de l'élément de liaison 13. De ce fait, après la séparation des deux parties inférieure 13B et supérieure 13A de l'élément de liaison 13, la couronne de découpe 20 reste solidaire d'une des deux parties, en l'occurrence la partie inférieure 13B de l'élément de liaison 13. En effet, dans l'application à un lanceur aéronautique, on choisit que la couronne de découpe 20 reste solidaire de l'étage inférieur, qui ne continue pas le vol de l'engin aéronautique et retombe sur terre. Cela permet d'éviter que la structure continuant le vol soit échauffée pendant une durée plus importante que nécessaire.

De manière générale, dans l'état actuel de ces techniques, les systèmes dérivant de ces solutions de liaison-séparation ont la particularité de laisser, la plupart du temps, des aspérités sur la forme extérieure du lanceur, après la séparation.

Le but de l'invention est de remédier aux inconvénients susmentionnés.

### EXPOSÉ DE L'INVENTION

À cet effet, un premier objet principal de l'invention est un ensemble constitué de deux éléments et d'un dispositif de liaison et de séparation linéaire desdits deux éléments, à savoir un premier élément et un second élément, liés linéairement l'un à l'autre par des moyens de liaison, et devant être séparés de façon certaine, la séparation ayant lieu par échauffement des moyens de liaison, cet échauffement étant déclenché à distance, le dispositif comprenant :
- les moyens de liaison entre les premier et second éléments ;
- un matériau pyrogène, générateur de chaleur, placé près des moyens de liaison, c'est-à-dire agencé de manière à permettre un échauffement de ces moyens de liaison ; et
- des moyens de déclenchement pyrotechnique à distance du matériau pyrogène.

Selon l'invention, dans le dispositif :
- le matériau pyrogène est placé dans un tube, lui-même placé entre le premier élément et le second élément ;
- les moyens de liaison sont constitués par de la colle et sont placés entre le tube et les premier et second éléments.

Dans la réalisation principale du dispositif, la colle est une colle thermiquement isolante vis-à-vis du tube et des premier et second éléments.

Dans une réalisation particulière du dispositif, un système de retenue du tube est prévu sur le premier élément.

De préférence, le système de retenue est métallique.

Dans une application principale du dispositif, le premier élément est un étage porteur du second élément porté d'un engin spatial.

Dans une réalisation préférentielle de l'invention, le matériau pyrogène est un mélange de thermite et d'une composition intermétallique.

Un autre objet principal de l'invention est un procédé de liaison et de séparation linéaire de deux éléments, un premier élément et un second élément destinés à être liés linéairement l'un à l'autre temporairement par des moyens de liaison, et devant être séparés de façon certaine, la séparation ayant lieu par échauffement généralement rapide et partiel des moyens de liaison, l'échauffement étant déclenché à distance.

Selon l'invention, le procédé comprend les étapes suivantes :
- lier le premier élément et le second élément par de la colle ;
- disposer du matériau pyrogène, c'est-à-dire générateur de chaleur, dans un tube lui-même placé entre le premier élément et le second élément, au milieu de la colle, le matériau de type pyrogène étant amorçable par une liaison électrique de commande ;
- déclencher pyrotechniquement ledit matériau de type pyrogène pour provoquer réchauffement rapide de la colle et obtenir la séparation des premier et second éléments.

### BRÈVE DESCRIPTION DES DESSINS

L'invention et ses différentes caractéristiques techniques seront mieux comprises à la lecture de la description suivante faite à titre d'exemple non limitatif, accompagnée de plusieurs figures représentant respectivement :
- figures 1A et 1B : des schémas représentant la séparation de deux éléments d'un lanceur aéronautique ;
- figures 2A, 2B et 2C : le principe de fonctionnement d'un dispositif de l'art antérieur ;
- figure 3 : un schéma représentant la localisation du dispositif selon l'invention, appliqué à un lanceur aéronautique ;
- figures 4A, 4B et 4C : trois schémas représentant le dispositif selon l'invention et son fonctionnement ; et
- figures 5A, 5B et 5C : trois schémas relatifs à une mise en œuvre préférentielle du dispositif selon l'invention et son fonctionnement.

### EXPOSÉ DÉTAILLÉ DE MODES DE RÉALISATION PRÉFÉRÉS

La figure 3 montre un lanceur aéronautique possédant un premier étage porteur 1 avec ses propulseurs et portant, au-dessus de sa partie supérieure, une partie à satelliser, ou un étage supérieur. Dans l'encadré montrant un agrandissement est localisée une liaison entre ces deux éléments du lanceur aéronautique.

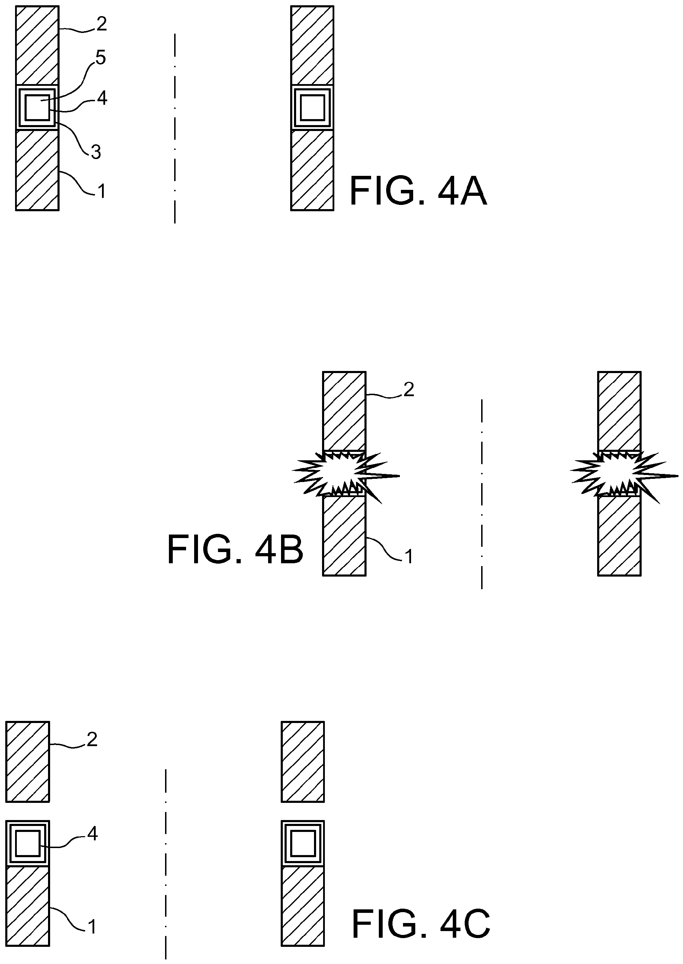

La figure 4A montre schématiquement, en coupe, les premier et second éléments 1 et 2 séparés par une partie représentée de forme carrée symbolisant des moyens de liaison. Ces derniers contiennent un tube contenant un matériau de type pyrogène 5. De préférence, ce matériau de type pyrogène est un mélange de thermite et de un ou de plusieurs matériaux métalliques, c'est-à-dire une composition intermétallique.

La thermite peut également être de la nano-thermite.

Le tube 4 est entouré d'une colle 3, notamment dans les parties supérieures et inférieures qui se trouvent en contact avec les premier et second éléments 1 et 2. La colle 3 assure donc la jonction et le maintien entre ces premier et second éléments 1 et 2, et ceci de façon étanche.

La colle 3 est par exemple une colle obtenue par le procédé INDAR développé par la société RESCOLL, ou encore une colle de type EA 9395.

En référence à la figure 4B, à un moment déterminé, on procède à la mise à feu du matériau de type pyrogène, de façon pyrotechnique, avec des moyens de déclenchement placés à distance par rapport à la liaison entre le premier élément 1 et le second élément 2 et agissant sur le matériau pyrogène 5 par l'intermédiaire d'une liaison électrique. Un échauffement très rapide d'une partie au moins du matériau de type pyrogène a lieu, atteignant donc rapidement une température suffisante pour faire fondre la colle. Bien entendu, le tube 4 doit présenter un point de fusion permettant de garantir son intégrité durant ce déclenchement, et l'élévation de température, tout en permettant l'échauffement de la colle jusqu'à sa carbonisation et donc la suppression de son effet de liaison avec les premier et second éléments 1 et 2. Ces derniers sont ainsi séparés.

La figure 4C montre cette séparation avec le premier élément 1 portant ce qu'il reste des moyens de liaison, c'est-à-dire en particulier le tube 4. Le second élément 2 est donc séparé du premier élément 1. On comprend donc qu'on peut procéder à la séparation de deux étages d'un engin aéronautique, notamment entre un premier étage porteur, constitué par le premier élément 1 et un second étage devant continuer son ascension vers l'espace et étant constitué par un second élément 2.

Dans cette architecture, les efforts généraux passent par la liaison collée et le tube métallique 4, qui sont donc dimensionnés en conséquence. On note que sur les figures 4A, 4B et 4C, les premier élément 1 et second élément 2 peuvent former une couronne intermédiaire entre les deux étages d'un engin aéronautique, c'est-à-dire constituant une liaison intermédiaire entre ces derniers.

Dans le mode de réalisation préféré de l'invention, on prévoit un système de retenue sur le premier élément 1 des moyens de liaison, notamment du tube 4, après déclenchement pyrotechnique.

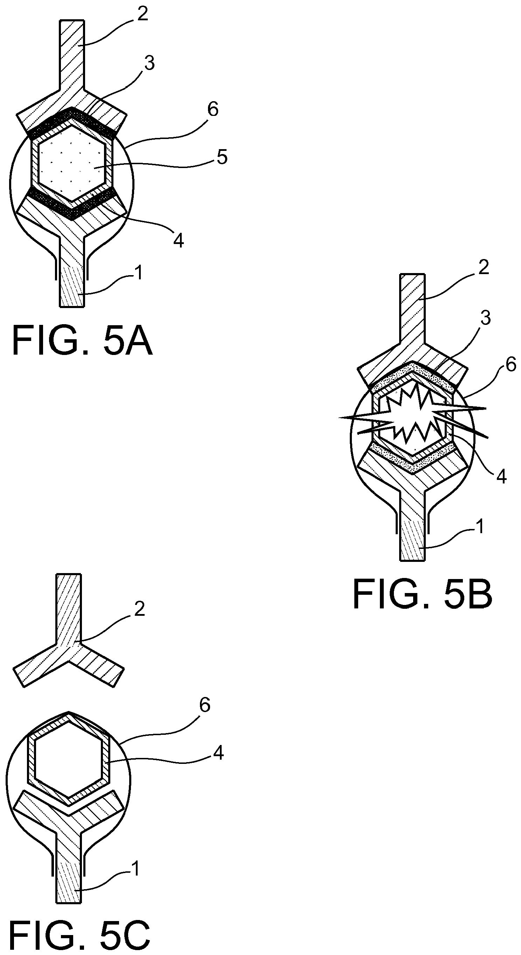

En référence aux demi-vues en section axiale des figures 5A, 5B et 5C, une réalisation particulière de l'invention est la suivante.

Les premier élément 1 et second élément 2 possèdent une extrémité élargie. Sur une surface d'extrémité de ces derniers est disposée la colle 3 qui entoure entièrement, ou au moins partiellement, le tube 4 rempli de matériau de type pyrogène 5.

Comme illustré à la figure 5B, la mise à feu du matériau de type pyrogène 5 provoque l'échauffement et la fusion ou la carbonisation de la colle 3.

Le système de retenue 6 est fixé au premier élément 1 et entoure au moins le tube 4.

De préférence, le système de retenue 6 comporte des orifices pour le passage de la colle 3.

Comme le montre la figure 5C, après le déclenchement pyrotechnique, il y a séparation des premier et second éléments 1 et 2. Le système de retenue 6 entoure toujours le tube 4, qui est retenu auprès du premier élément 1. On prévoit que ce système de retenue soit constitué d'un film métallique entourant le tube 4, sur toute sa circonférence, celui-ci étant annulaire comme les éléments 1 et 2. Ce système de retenue 6 doit avoir un point de fusion élevé, afin de résister à la chaleur dégagée par le matériau de type pyrogène. Le point de fusion du système de retenue 6 et celui du tube 4 sont en particulier supérieurs au point de fusion de la colle 3.

Concernant ce dernier, le choix de la thermite peut se faire en fonction de la colle utilisée, ainsi que des caractéristiques du matériau utilisé pour constituer le tube.

En variante, le système de retenue 6 peut être fixé directement à des régions latérales du tube 4 agencées chacune entre les parties du tube qui sont en contact avec la colle 3.

En d'autres termes, l'invention concerne un ensemble comprenant un premier élément 1 et un second élément 2 reliés linéairement l'un à l'autre par des moyens de liaison, et comprenant, outre les moyens de liaison, un matériau pyrogène et des moyens de déclenchement pyrotechnique à distance du matériau pyrogène, dans lequel:
- le matériau pyrogène 5 est placé dans un tube 4 lui-même placé entre le premier élément 1 et le second élément 2, et
- les moyen de liaison sont constitués par une colle 3 placée entre le tube 4 et chacun des premier et second éléments 1, 2.

Un procédé de liaison temporaire d'un premier élément et d'un second élément selon l'invention comporte donc les étapes consistant à :
- disposer un matériau pyrogène dans un tube muni de moyens de déclenchement pyrotechnique à distance du matériau pyrogène ; puis
- interposer une colle entre le tube et le premier élément, et entre le tube et le second élément de sorte que la colle assure la fixation de chacun des premier et second éléments au tube.

Un procédé de séparation d'un premier élément et d'un second élément préalablement reliés au moyen du procédé de liaison temporaire ci-dessus, et formant donc un ensemble du type décrit ci-dessus, consiste à opérer un déclenchement pyrotechnique du matériau pyrogène 5 de sorte qu'un échauffement du matériau pyrogène 5 provoque un échauffement de la colle 3 permettant la fusion ou la carbonisation de cette colle 3 et donc la séparation mutuelle des premier et second éléments 1, 2.

Le dispositif et le procédé selon l'invention peuvent être utilisés aussi bien dans le domaine civil que dans le domaine militaire. On note que l'invention permet un niveau de chocs pyrotechniques réduit, voire inexistant, ce qui est primordial pour la pérennité du matériel, notamment du second élément.

En évitant d'utiliser des moyens de liaison métalliques entre les premier et second éléments, on s'affranchit de générer des débris métalliques, fondus ou pas, après le déclenchement pyrotechnique.

## Revendications

1. Ensemble constitué de deux éléments (1, 2) et d'un dispositif de liaison et de séparation linéaire desdits deux éléments, à savoir un premier élément (1) et un second élément (2), liés linéairement l'un à l'autre par des moyens de liaison, et devant être séparés de façon certaine, la séparation ayant lieu par échauffement des moyens de liaison, cet échauffement étant déclenché à distance, le dispositif de liaison et de séparation comprenant :
- les moyens de liaison entre les premier et second éléments (1, 2) ;
- un matériau pyrogène (5), générateur de chaleur, placé près des moyens de liaison ; et
- des moyens de déclenchement pyrotechnique à distance du matériau pyrogène (5),
**caractérisé en ce que** :
- le matériau pyrogène (5) est placé dans un tube (4) lui-même placé entre le premier élément (1) et le second élément (2) ; et
- les moyen de liaison sont constitués par une colle (3) placée entre le tube (4) et chacun des premier et second éléments (1, 2).

2. Ensemble selon la revendication 1, **caractérisé en ce que** la colle (3) est une colle thermiquement isolante vis-à-vis du tube (4) et des premier et second éléments (1, 2).

3. Ensemble selon la revendication 1, **caractérisé en ce qu'**il comprend un système de retenue (6) du tube (4) sur le premier élément (1).

4. Ensemble selon la revendication 3, **caractérisé en ce que** le système de retenue (6) est métallique.

5. Ensemble selon la revendication 1, **caractérisé en ce qu'**il s'applique à un engin spatial, le premier élément (1) correspondant à un étage porteur, le second élément (2) correspondant à un étage porté.

6. Ensemble selon la revendication 1, **caractérisé en ce que** le matériau pyrogène est un mélange de thermite et d'une composition intermétallique.

7. Procédé de liaison et de séparation linéaire de deux éléments, un premier élément (1) et un second élément (2) destinés à être liés linéairement l'un à l'autre temporairement par des moyens de liaison, et devant être séparés de façon certaine, la séparation ayant lieu par un échauffement des moyens de liaison, l'échauffement étant déclenché à distance, comprenant les étapes suivantes
- lier le premier élément (1) et le second élément (2) par de la colle (3) ;
- disposer un matériau pyrogène (5), générateur de chaleur, dans un tube (4), lui-même placé entre le premier élément (1) et le second élément (2), au milieu de la colle, le matériau pyrogène (5) étant amorçable par une liaison électrique de commande ; et
- déclencher pyrotechniquement ledit matériau pyrogène (5) pour provoquer l'échauffement rapide de la colle (3) et obtenir la séparation des premier et second éléments (1, 2).

## Patentansprüche

1. Anordnung aus zwei Elementen (1, 2) und einer Vorrichtung zur Verbindung und linearen Trennung der beiden Elemente, nämlich eines ersten Elements (1) und eines zweiten Elements (2), die durch Verbindungsmittel linear miteinander verbunden sind und in bestimmter Weise getrennt werden sollen, wobei die Trennung durch Erwärmung der Verbindungsmittel erfolgt, wobei diese Erwärmung ferngesteuert ausgelöst wird, wobei die Verbindungs- und Trennvorrichtung enthält:
- Verbindungsmittel zwischen dem ersten und zweiten Element (1, 2);
- ein wärmeerzeugendes pyrogenes Material (5), das in der Nähe der Verbindungsmittel angeordnet ist; und
- Mittel zur pyrotechnischen Fernauslösung des pyrogenen Materials (5), **dadurch gekennzeichnet, dass**:
- das pyrogene Material (5) in einer Röhre (4) angeordnet ist, die ihrerseits zwischen dem ersten Element (1) und dem zweiten Element (2) angeordnet ist; und
- die Verbindungsmittel aus einem Klebstoff (3) bestehen, der zwischen der Röhre (4) und jedem aus erstem und zweitem Element (1, 2) angeordnet ist.

2. Anordnung nach Anspruch 1,
**dadurch gekennzeichnet, dass** der Klebstoff (3) ein in Bezug auf die Röhre (4) und das erste und zweite Element (1, 2) thermisch isolierender Klebstoff ist.

3. Anordnung nach Anspruch 1,
**dadurch gekennzeichnet, dass** sie ein Haltesystem (6) zum Halten der Röhre (4) an dem ersten Element (1) enthält.

4. Anordnung nach Anspruch 3,
**dadurch gekennzeichnet, dass** das Haltesystem (6) aus Metall besteht.

5. Anordnung nach Anspruch 1,
**dadurch gekennzeichnet, dass** sie bei einem Raumfahrzeug Anwendung findet, wobei das erste Element (1) einer Trägerstufe entspricht und das zweite Element (2) einer getragenen Stufe entspricht.

6. Anordnung nach Anspruch 1,
**dadurch gekennzeichnet, dass** das pyrogene Material eine Gemisch aus Thermit und einer intermetallischen Zusammensetzung ist.

7. Verfahren zum Verbinden und linearen Trennen zweier Elemente, nämlich eines ersten Elements (1) und eines zweiten Elements (2), die dazu bestimmt sind, durch Verbindungsmittel temporär linear miteinander verbunden zu werden, und in bestimmter Weise getrennt werden sollen, wobei die Trennung durch Erwärmung der Verbindungsmittel erfolgt, wobei die Erwärmung ferngesteuert ausgelöst wird,
umfassend die folgenden Schritte:
- Verbinden des ersten Elements (1) und des zweiten Elements (2) mittels Klebstoff (3);
- Anordnen eines wärmeerzeugenden pyrogenen Materials (5) in einer Röhre (4), die ihrerseits zwischen dem ersten Element (1) und dem zweiten Element (2) angeordnet ist, und zwar in der Mitte des Klebstoffs, wobei das pyrogene Material (5) durch eine elektrische Steuerverbindung gezündet werden kann; und
- pyrotechnisches Auslösen des pyrogenen Materials (5), um eine schnelle Erwärmung des Klebstoffs (3) zu bewirken und die Trennung des ersten und zweiten Elements (1, 2) zu erreichen.

## Claims

1. Assembly of two elements (1, 2) and a device for the connection and linear separation of said two elements, i.e. a first element (1) and a second element (2), linearly connected to one another by connecting means, and having to be securely separated, the separation taking place by warming-up of the connecting means, said warming-up being triggered remotely, the connection and separation device comprising:
- the connecting means between the first and second elements (1);
- a pyrogenic material (5), heat generator, placed close to the connecting means; and
- means for remotely pyrotechnically triggering the pyrogenic material (5), **characterised in that**:
- the pyrogenic material (5) is placed in a tube (4), same placed between the first element (1) and the second element (2); and
- the connecting means are composed of an adhesive (3) placed between the tube (4) and each of the first and second elements (1, 2).

2. Assembly according to claim 1, **characterised in that** the adhesive (3) is a thermally insulating adhesive in relation to the tube (4) and the first and second elements (1, 2).

3. Assembly according to claim 1, **characterised in that** it comprises a retainer system (6) for retaining the tube (4) on the first element (1).

4. Assembly according to claim 3, **characterised in that** the retainer system (6) is metallic.

5. Assembly according to claim 1, **characterised in that** it applies to a space vehicle, the first element (1) corresponding to a carrier stage, the second element (2) corresponding to a carried stage.

6. Assembly according to claim 1, **characterised in that** the pyrogenic material is a mixture of thermite and an intermetallic composition.

7. Method for the connection and linear separation of two elements, a first element (1) and a second element (2) intended to be linearly connected to one another temporarily by connecting means, and having to be securely separated, the separation taking place by warming-up of the connecting means, said warming-up being triggered remotely,
comprising the following steps:
- connecting the first element (1) and the second element (2) by the adhesive (3);
- disposing a pyrogenic material (5), heat generator, in a tube (4), same placed between the first element (1) and the second element (2), in the middle of the adhesive, the pyrogenic material (5) being activatable by an electrical control connection; and
- pyrotechnically triggering said pyrogenic material (5) in order to cause the rapid warming-up of the adhesive (3) and to obtain the separation of the first and second elements (1, 2).
